# EUROPÄISCHE PATENTSCHRIFT

(11) **EP 3 083 295 B1**
(45) Veröffentlichungstag und Bekanntmachung des Hinweises auf die Patenterteilung: **05.08.2020**
(21) Anmeldenummer: 14707732.5
(22) Anmeldetag: 28.02.2014
(51) Int. Cl.: B60G 15/06, B60G 13/00

(54) **SCHWINGUNGSDÄMPFER- ODER FEDERBEINABSTÜTZUNG FÜR EINE KRAFTFAHRZEUGRADAUFHÄNGUNG**
VIBRATION DAMPER SUPPORT OR SUSPENSION STRUT SUPPORT FOR A MOTOR VEHICLE WHEEL SUSPENSION
SUPPORT DE JAMBE DE FORCE OU D'AMORTISSEUR DE VIBRATIONS POUR SUSPENSION DE ROUE DE VÉHICULE

(30) Priorität: 19.12.2013 DE 102013226574
(43) Veröffentlichungstag der Anmeldung: 26.10.2016
(73) Patentinhaber: Bayerische Motoren Werke Aktiengesellschaft, 80809 München (DE)
(72) Erfinder: DUDKOWIAK, Johann, 82343 Poecking (DE); EIFFLÄNDER, Thomas, 80935 München (DE)
(86) Internationale Anmeldenummer: PCT/EP2014/053912
(87) Internationale Veröffentlichungsnummer: WO 2015/090626

(56) Entgegenhaltungen:
- EP-A1- 0 105 232
- EP-A2- 0 182 478
- DE-A1-102008 010 541
- FR-A- 1 391 349
- US-A- 3 417 986
- US-A1- 2002 104 722

## Beschreibung

Die Erfindung betrifft eine Federbein- oder Schwingungsdämpferabstützung durch ein oberes Stützlager einer Fahrzeugradaufhängung, das eine Kolbenstange eines Schwingungsdämpfers letztlich an einer Fahrzeugkarosserie abstützt, nach dem Oberbegriff des ersten und des zweiten Anspruchs. Bekannt sind unterschiedliche Konzepte für die Anbringung von Federbeinen einer Fahrzeugradaufhängung an einer Fahrzeugkarosserie. Bei mehrspurigen Fahrzeugen wird an gelenkten Rädern zumeist das so genannte Mc-Pherson-Federbein verbaut, wobei eine Tragfeder und ein zugeordneter, parallel geschalteter Schwingungsdämpfer einerseits an einem Radführungsglied und andererseits über ein so genanntes Stützlager an der Karosserie des Fahrzeugs abgestützt sind. Dieses Stützlager kann ein Gummi-Metalllager sein, welches als Elastomerelement gleichzeitig als Feder und Dämpfer wirkt. Üblicherweise ist die Kolbenstange des Schwingungsdämpfers am Stützlager befestigt, während der Schwingungsdämpfer-Zylinder am Radführungsglied abgestützt und mit einer Aufnahme für die Tragfeder versehen ist, und es ist üblicherweise in diesem Bereich ferner eine so genannte Zusatzfeder vorgesehen, die ebenfalls als elastomeres Federelement ausgebildet ist und an der der Schwingungsdämpfer-Zylinder nach einem gewissen Einfederweg der Tragfeder zum Anschlag kommt. Mit dieser federwegabhängig gestuften Parallelschaltung von Tragfeder und Zusatzfeder kann dann die Federcharakteristik relativ einfach in gewünschter Weise gestaltet werden. Diese konventionelle, bspw. in der US 4,934,730 A gezeigte und insbesondere an gelenkten Rädern anzutreffende Federbein-Anordnung hat den Vorteil, dass sich die möglichen "Einfeder"-Wege des Stützlagers und des der Tragfeder parallelgeschalteten Schwingungsdämpfers addieren. Die mechanische Belastung des Stützlagers und der Fahrzeugkarosserie, im Bereich des Schwingungsdämpfers meist ausgebildet als Federbeindom, ist relativ groß, nachdem dieser auch die hohen Kräfte von der Zusatzfeder aufnehmen muss. Vor allem bei Hindernisüberfahrt kann die Krafteinleitung vom Außenring des Stützlagers in den Federbeindom, diesen aufgrund der auftretenden hohen Kraftspitzen verformen. Eine Auslegung des Federbeindoms auf maximale Last macht den Federbeindom schwer und teuer. Solche Federbeinbefestigungen, durch die die Einfederwege der einzelnen Federn addiert werden, beschreiben auch die FR 1 391 349 A, die EP 0 105 232 A1, die US 3 417 986 A und die EP 0 182 478 A2.

Die DE 10 2011 089 432 A1 beschreibt eine Vorrichtung mit einstellbarer Steifigkeit zum Aufnehmen einer Aufprallenergie. Eine solche adaptive Crashstruktur oder auch Crash-Box oder Crash-Can, die nach dem Stand der Technik in verschiedenen Größen und Formen bekannt ist, verformt sich bei Überbelastung und kann danach als zerstörtes Bauteil herausgenommen und ausgewechselt werden.

Die DE 10 2008 010541 A1, beschreibt eine Federbein- oder Stoßdämpferabstützung durch ein oberes Stützlager einer Fahrzeugradaufhängung, das eine Kolbenstange eines Dämpfers über ein Elastomerelement letztlich an einer Karosserie des Fahrzeugs abstützt, wobei das Stützlager eine Durchtrittsöffnung für die Kolbenstange besitzt, die mit einer Karosserie-Durchgangsöffnung korrespondiert und mindestens aus einem mit dem Federbeindom verbundenen Außenring und aus einem die Kolbenstange, insbesondere über ein Wälzlager, abstützenden Innenring mit dazwischen eingebrachtem elastomerem Werkstoff, insbesondere Gummi, besteht, die dadurch gekennzeichnet ist, dass der Außenring eine Einrichtung zum Abbau kinetischer Energie besitzt, die dazu beim Auftreten von über den vorgesehenen maximalen Auslegungskräften liegenden Kräften eine Relativbewegung zwischen zwei ineinander verschiebbaren Außenringelementen zulässt. Die DE 10 2008 010 541 A1 beschreibt den Oberbegriff der Ansprüche 1 und 2.

Aufgabe der vorliegenden Erfindung ist es, aufbauend auf dem zitierten Stand der Technik, eine Federbein- oder Schwingungsdämpferabstützung für ein Fahrzeug bereitzustellen, die bei Überbeanspruchung Verformungen des Federbeindoms verhindert, ohne dass dieser in der Wandstärke massiv gestaltet werden muss, wobei die Einrichtung zum Abbau kinetischer Energie preiswert als Massenteil hergestellbar sein soll.

Die Aufgabe wird durch die Merkmale des ersten beziehungsweise zweiten Anspruchs gelöst. Weitere Ausbildungen der Erfindung beschreiben die abhängigen Ansprüche.

Nach der Erfindung ist eine Federbein- oder Schwingungsdämpferabstützung durch ein oberes Stützlager einer Fahrzeugradaufhängung, das eine Kolbenstange eines Schwingungsdämpfers letztendlich an einer Abstützstelle einer Fahrzeugkarosserie abstützt, wozu die Kolbenstange mit einem Stützlagerkörper und dieser mit der Fahrzeugkarosserie verbunden ist, wobei das Stützlager eine Einrichtung zum Abbau kinetischer Energie umfasst, die beim Auftreten von Kräften, die ohne diese Einrichtung eine Verformung der Fahrzeugkarosserie bewirken würden, eine Relativbewegung zwischen Fahrzeugkarosserie und Stützlagerkörper zulässt und dabei kinetische Energie abbaut, dadurch gekennzeichnet, dass die Einrichtung zum Abbau kinetischer Energie zwischen Stützlagerkörper und Fahrzeugkarosserie eingebracht ist und wenigstens aus einem Crash-Element besteht, dessen Stabilität so bemessen ist, dass diese mindestens eine Belastung durch im Betrieb vorgesehene Abstützkräfte des Schwingungsdämpfers und einer Zusatzfeder, oder des Schwingungsdämpfers, dessen Zusatzfeder und einer Fahrzeugkarosserie-Tragfeder, an der Fahrzeugkarosserie und umgekehrt zerstörungsfrei übertragen kann.

So wird vorteilhafterweise die höchst mögliche Last, aufgrund der Einbeziehung der Zusatzfeder, durch die Überlastsicherung abgesichert.

Diese Federbein- oder Schwingungsdämpferabstützung hat weiter den Vorteil, dass bei Überbeanspruchung der Radaufhängung, zum Beispiel beim Auffahren auf einen Bordstein, durch die bei einer Abstützung nach dem Stand der Technik die Karosserie an der Abstützstelle verformt werden würde, bei der Abstützung nach der Erfindung keine Verformung der Karosserie stattfindet. Die zu große Krafteinleitung wird durch Verschieben des Stützlagerkörpers zur Fahrzeugkarosserie hin unter Abbau kinetischer Energie, die in der Einrichtung in Reibungs- und/oder Deformationskraft umgewandelt wird, abgebaut.

Ebenso ist nach der Erfindung eine Federbein- oder Schwingungsdämpferabstützung durch ein oberes Stützlager einer Fahrzeugradaufhängung, das eine Kolbenstange eines Schwingungsdämpfers letztendlich elastisch an einer Abstützstelle einer Fahrzeugkarosserie abstützt, wobei das Stützlager wenigstens aus einem der Fahrzeugkarosserie zugeordneten Außenring und aus wenigstens einem die Kolbenstange abstützenden Innenring mit dazwischen eingebrachtem elastomerem Werkstoff besteht, wobei das Stützlager eine Einrichtung zum Abbau kinetischer Energie umfasst, die beim Auftreten von über den vorgesehenen maximalen Auslegungskräften liegenden Kräften eine Relativbewegung zwischen Fahrzeugkarosserie und Außenring zulässt, dadurch gekennzeichnet, dass die Einrichtung zum Abbau kinetischer Energie zwischen Außenring und Fahrzeugkarosserie eingebracht ist und wenigstens aus einem Crash-Element besteht, dessen Stabilität so bemessen ist, dass diese mindestens eine Belastung durch im Betrieb vorgesehene Abstützkräfte des Schwingungsdämpfers und einer Zusatzfeder, oder des Schwingungsdämpfers, dessen Zusatzfeder und einer Fahrzeugkarosserie-Tragfeder, an der Fahrzeugkarosserie und umgekehrt zerstörungsfrei übertragen kann.

Eine solche Gestaltung des oberen Stützlagers ergibt eine Federbein- oder Schwingungsdämpferabstützung für ein Fahrzeug, die im Normalbetrieb hervorragende Feder- und Dämpfungseigenschaften aufweist. Für sehr große Beanspruchungen ist die erfindungsgemäße Federbein- oder Schwingungsdämpferabstützung vorteilhafterweise dadurch hervorragend geeignet, dass bei zu großer Krafteinleitung der Außenring des Stützlagers zur Fahrzeugkarosserie hin unter Abbau weiterer kinetischer Energie, die in Reibungs- und/oder Deformationskraft umgewandelt wird, verschoben wird. Das ergibt eine geringere karosserieseitige Belastung, was bleibenden Karosserieverformungen vorbeugt, wenn plötzlich große Laststöße, zum Beispiel bei einer schnellen Hindernisüberfahrt, auftreten.

Bevorzugte Ausführungsformen der Erfindung zeichnen sich dadurch aus, dass die Einrichtung zum Abbau kinetischer Energie wenigstens aus drei Crash-Element(en) besteht. Ein oder mehrere Crash-Elemente, nach dem Stand der Technik, eingebracht zwischen Außenring beziehungsweise Stützlagerkörper und Fahrzeugkarosserie, haben den Vorteil, dass die Einrichtung zum Abbau kinetischer Energie preiswert als Massenteil hergestellt und an die jeweilig auftretenden Lastfälle einfach angepasst werden kann. Crash-Elemente, auch Crash-Cans genannt, werden mit definierten Belastungswerten für Versagen angeboten und brauchen nur nach diesen ausgewählt und eingebaut werden. Im normalen Fahrbetrieb wird durch die Stabilität der Crash-Elemente ein Verschieben des Außenrings gegenüber der Fahrzeugkarosserie verhindert. Als Überlastsicherung wirkt das Crash-Element dann, wenn die Kraft, bei der seine Zerstörung und damit die Verschiebung des Außenrings beziehungsweise Stützlagerkörpers zur Fahrzeugkarosserie hin einsetzt, durch die Bauweise des Crash-Elements so eingestellt ist, dass ihr Wert etwas kleiner ist als der Wert der Kraft, der zum Versagen von Karosserie-Bauteilen führt.

Weitere bevorzugte Ausführungsformen der Erfindung sind dadurch gekennzeichnet, dass die Abstützstelle zwischen Außenring beziehungsweise Stützlagerkörper und Fahrzeugkarosserie über die Einrichtung zum Abbau kinetischer Energie, in einem Federbeindom liegt.

Die Haltekraft der Einrichtung zum Abbau kinetischer Energie kann dabei gemäß des Standes der Technik einstellbar sein. Dabei kann vorteilhafterweise ein Crash-Element so gestaltet sein, dass es sich selbst bei Überlast zum Beispiel mittels eines Stanz-Stempels verformt. Durch die Gestaltung der Crash-Elemente kann der gewünschte Energieabbau eingestellt werden. Die Haltekraft der Einrichtung zum Abbau kinetischer Energie kann dann so gewählt sein, dass deren Verformung dann stattfindet, wenn durch das Stützlager Kräfte übertragen werden, die ohne Verformung der Einrichtung zum Abbau kinetischer Energie eine bleibende Verformung der Fahrzeugkarosserie verursachen würden. Zusätzliche Anschläge in Druck- und/oder in Zugrichtung können eine Wegbegrenzung sicherstellen beziehungsweise ein Herausfallen sichern.

Bei weiteren bevorzugten Ausführungen der Erfindung kann verwirklicht sein, dass eine Verformung der Einrichtung zum Abbau kinetischer Energie durch eine Sensoreinrichtung registriert wird. Dabei kann auch eine Verschiebung des Außenrings beziehungsweise des Stützlagerkörpers gegenüber der Fahrzeugkarosserie durch eine Anzeigeeinrichtung registriert werden. Eine solche vorteilhafte Anzeige eines aufgetretenen Überlastfalles, die zum Beispiel optisch mittels farblicher Skalierung oder elektrisch mittels Scherdraht oder Endkontakt zwischen den Außenringelementen erfolgen kann, erleichtert die Schadenserkennung beim Service.

Beim Auftreten einer Überbelastung, das heißt von über den vorgesehenen maximalen Auslegungskräften liegenden Kräften, werden durch diese Maßnahmen bleibende Federbeindomverformungen auch ohne große Blechverstärkungen verhindert und so aufwändige Reparaturmaßnahmen vermieden und vorteilhafterweise eine Auslegung der Karosseriestruktur auf geringere Maximallasten ermöglicht. Es kann die ohne Verformung in die Karosseriestruktur einleitbare Maximalkraft entsprechend skaliert werden. Verschiedene montierbare Crash-Elemente ermöglichen dabei eine Skalierbarkeit in der Montage ohne zusätzlichen Steuerungsaufwand.

Zwei bevorzugte Ausführungsbeispiele der vorliegenden Erfindung sind in der beigefügten Zeichnung auf das Wesentliche beschränkt dargestellt. Es zeigen:
- Figur 1:: einen Schnitt durch ein Stützlager einer erfindungsgemäßen Schwingungsdämpferabstützung und
- Figur 2:: einen Schnitt durch ein Stützlager einer weiteren Ausführung einer erfindungsgemäßen Schwingungsdämpferabstützung.

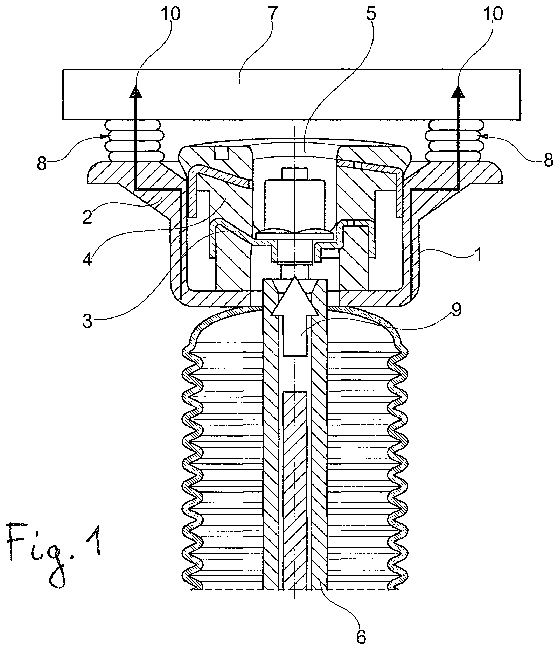

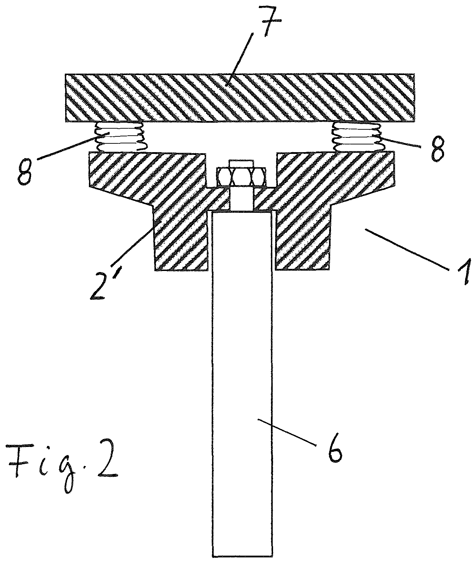

In den Figuren 1 und 2 nicht dargestellt ist ein Radführungsglied eines Rades eines mehrspurigen Kraftfahrzeugs, da die Gestaltung eines Federbeins bzw. Schwingungsdämpfers in diesem Bereich wie im bekannten Stand der Technik üblich ist. Die vorliegende Erfindung befasst sich mit dem gegenüberliegenden Bereich des Federbeins oder Schwingungsdämpfers, nämlich mit dessen Abstützung an einer Fahrzeug-Karosserie 7. Bestandteile des Federbeins sind dabei u.a. eine nicht gezeichnete Tragfeder, welcher ein nur teilweise im oberen Bereich gezeichneter Schwingungsdämpfer mit einer Kolbenstange 6 parallel geschaltet ist. Über dieses Federbein ist die Karosserie 7 des Kraftfahrzeugs auf dem Radführungsglied abgestützt. Ein oberes Stützlager 1, in Figur 1 bestehend aus einem Außenring 2, einem Innenring 3 und einem dazwischen befindlichen Elastomerelement 4 und in Figur 2 bestehend aus einem massiven oder elastischen Stützlagerkörper 2', besitzt eine Durchtrittsöffnung 5 für die Kolbenstange 6 des Schwingungsdämpfers und verbindet die Karosserie 7 mit der Kolbenstange 6, indem diese im Innenring 3 des Stützlagers 1, Figur 1, beziehungsweise im Stützlagerkörper 2', Figur 2, gelagert ist. Das entsprechende Gegenlager hierzu ist in Figur 1 am Außenring 2 ausgebildet, der einerseits mit dem Elastomerelement 4 und andererseits mit der Fahrzeugkarosserie 7 verbunden ist. Im Ausführungsbeispiel von Figur 2 ist der Stützlagerkörper 2', ebenso wie in der Figur 1 der Außenring 2, mittels nicht gezeichneter Befestigungsmittel nach dem Stand der Technik an der Fahrzeugkarosserie 7 angebracht. Zwischen dieser und dem Außenring 2 beziehungsweise dem Stützlagerkörper 2' sind Crash-Elemente 8 eingebracht, auch Crash-Cans genannt. In der Zeichnung sind zwei Crash-Elemente 8 sichtbar durch Pfeile gekennzeichnet.

Auf der Kolbenstange 6 des Schwingungsdämpfers kann eine nicht gezeichnete, gummielastische, so genannte Zusatzfeder angeordnet sein, an der bei entsprechender Einfederung der Tragfeder und somit bei entsprechender Verlagerung der Kolbenstange in den nicht gezeichneten Dämpferzylinder des Schwingungsdämpfers hinein, der Dämpferzylinder mit seiner der Karosserie (bzw. dem Stützlager 1) zugewandten Seite zum Anschlag kommen kann. Diese Zusatzfeder wird auf geeignete Weise auf der Kolbenstange gehalten. Das Stützlager 1 stützt den Schwingungsdämpfer über das obere, dem eingangs genannten Radführungsglied gegenüber liegende, Ende der Kolbenstange 6 an der Karosserie 7 ab und ist mit dieser über seinen Außenring 2 beziehungsweise seinen Stützlagerkörper 2' und die Crash-Elemente 8 mittels nicht gezeichneten Schraubenbolzen und Muttern verbunden.

Die Haltekraft der Crash-Elemente 8 ist so bemessen, dass diese mindestens eine Belastung (Druckkraftpfeil 9) durch im Betrieb vorgesehene Abstützkräfte des Schwingungsdämpfers und der Zusatzfeder an der Karosserie 7 und umgekehrt überträgt. Die Stabilität der Crash-Elemente 8 verhindert, dass bereits Betriebskräfte deren Zerstörung und damit eine Relativbewegung zwischen Fahrzeugkarosserie 7 und Außenring 2 beziehungsweise Stützlagerkörper 2' bewirken. Erst beim Auftreten von Kräften, die größer sind als die vorgesehenen Betriebskräfte (Kraftflusspfeile 10), werden die Crash-Elemente 8 zerstört und der Außenring 2 beziehungsweise der Stützlagerkörper 2' verschiebt sich unter Abbau von kinetischer Energie in den Crash-Elementen 8. Durch den Energieabbau wird eine bleibende Verformung der Karosserie 7 verhindert.

Die Crash-Elemente 8 und deren Verbindung zu Karosserie 7 und Außenring 2 beziehungsweise Stützlagerkörper 2' sind so ausgebildet, dass sie auch in Zugrichtung bei normalen Betriebskräften eine Relativbewegung zwischen Außenring 2 beziehungsweise Stützlagerkörper 2' und Fahrzeugkarosserie 7 verhindern. Erst beim Auftreten von Zugkräften, die größer sind als die vorgesehenen Betriebskräfte, verformen sich die Crash-Elemente 8 und der Außenring 2 beziehungsweise der Stützlagerkörper 2' verschiebt sich nach unten, ebenfalls unter Abbau von kinetischer Energie durch Verformung der Crash- Elemente 8. Durch den Energieabbau wird dann auch bei Überbelastung in Zugrichtung eine bleibende Verformung der Karosserie vermieden. Durch alternativen Einbau von Crash-Elementen 8 unterschiedlicher Losbrechkraft für die Verformung kann das Stützlager 1 an unterschiedliche Ausführungen von Kraftfahrzeugen mit unterschiedlichen Motorisierungen angepasst werden.

Ganz allgemein ist die Erfindung ein Stützlager 1 mit einem kostengünstigen, prozesssicheren Überlastschutz für Bauteile und Systeme, die bei Vertikalbelastungen im Kraftfluss liegen, wie Karosserie-, insbesondere Federbeindom-, und Fahrwerkskomponenten. Die Crash-Elemente 8, die den Überlastschutz bewirken, benötigen wenig zusätzlichen Bauraum, kollidieren im Schadensfall nicht mit Lenkern, Rädern und Abtriebswellen und ermöglichen eine eindeutige Anzeige und kostengünstigen Komponententausch im Schadensfall. Außerdem sind sie aufgrund ihrer Lage vor äußeren Einflüssen gut geschützt.

## Patentansprüche

1. Federbein- oder Schwingungsdämpferabstützung durch ein oberes Stützlager (1) einer Fahrzeugradaufhängung, das eine Kolbenstange (6) eines Schwingungsdämpfers letztendlich an einer Abstützstelle einer Fahrzeugkarosserie (7) abstützt, wozu die Kolbenstange mit einem Stützlagerkörper (2') und dieser mit der Fahrzeugkarosserie verbunden ist, wobei das Stützlager (1) eine Einrichtung zum Abbau kinetischer Energie umfasst, die beim Auftreten von Kräften, die ohne diese Einrichtung eine Verformung der Fahrzeugkarosserie bewirken würden, eine Relativbewegung zwischen Fahrzeugkarosserie (7) und Stützlagerkörper (2') zulässt und dabei kinetische Energie abbaut, **dadurch gekennzeichnet, dass** die Einrichtung zum Abbau kinetischer Energie zwischen Stützlagerkörper (2') und Fahrzeugkarosserie (7) eingebracht ist und wenigstens aus einem Crash-Element (8) besteht, dessen Haltekraft so bemessen ist, dass diese mindestens eine Belastung durch im Betrieb vorgesehene Abstützkräfte des Schwingungsdämpfers und einer Zusatzfeder oder des Schwingungsdämpfers, dessen Zusatzfeder und einer Fahrzeugkarosserie-Tragfeder an der Fahrzeugkarosserie (7) und umgekehrt zerstörungsfrei übertragen kann.

2. Federbein- oder Schwingungsdämpferabstützung durch ein oberes Stützlager (1) einer Fahrzeugradaufhängung, das eine Kolbenstange (6) eines Schwingungsdämpfers letztendlich elastisch an einer Abstützstelle einer Fahrzeugkarosserie (7) abstützt, wobei das Stützlager (1) wenigstens aus einem der Fahrzeugkarosserie (7) zugeordneten Außenring (2) und aus wenigstens einem die Kolbenstange (6) abstützenden Innenring (3) mit dazwischen eingebrachtem elastomerem Werkstoff (4) besteht, wobei das Stützlager (1) eine Einrichtung zum Abbau kinetischer Energie umfasst, die beim Auftreten von über den vorgesehenen maximalen Auslegungskräften liegenden Kräften eine Relativbewegung zwischen Fahrzeugkarosserie (7) und Außenring (2) zulässt, **dadurch gekennzeichnet, dass** die Einrichtung zum Abbau kinetischer Energie zwischen Außenring (2) und Fahrzeugkarosserie (7) eingebracht ist und wenigstens aus einem Crash-Element (8) besteht, dessen Haltekraft so bemessen ist, dass diese mindestens eine Belastung durch im Betrieb vorgesehene Abstützkräfte des Schwingungsdämpfers und einer Zusatzfeder oder des Schwingungsdämpfers, dessen Zusatzfeder und einer Fahrzeugkarosserie-Tragfeder an der Fahrzeugkarosserie (7) und umgekehrt zerstörungsfrei übertragen kann.

3. Federbein- oder Schwingungsdämpferabstützung nach Anspruch 2, **dadurch gekennzeichnet, dass** die Abstützstelle, über die Einrichtung zum Abbau kinetischer Energie zwischen Außenring (2) und Fahrzeugkarosserie (7), in einem Federbeindom liegt.

4. Federbein- oder Schwingungsdämpferabstützung nach Anspruch 1, **dadurch gekennzeichnet, dass** die Abstützstelle, über die Einrichtung zum Abbau kinetischer Energie zwischen Stützlagerkörper (2') und Fahrzeugkarosserie (7), in einem Federbeindom liegt.

5. Federbein- oder Schwingungsdämpferabstützung nach einem der Ansprüche 1 bis 4, **dadurch gekennzeichnet, dass** die Einrichtung zum Abbau kinetischer Energie wenigstens drei Crash-Elemente (8) umfasst.

6. Federbein- oder Schwingungsdämpferabstützung nach einem der Ansprüche 1 bis 5, **dadurch gekennzeichnet, dass** die Haltekraft der Einrichtung zum Abbau kinetischer Energie einstellbar ist.

7. Federbein- oder Schwingungsdämpferabstützung nach einem der Ansprüche 1 bis 6, **dadurch gekennzeichnet, dass** die Haltekraft der Einrichtung zum Abbau kinetischer Energie so gewählt ist, dass deren Verformung dann stattfindet, wenn durch das Stützlager (1) Kräfte übertragen werden, die ohne Verformung der Einrichtung zum Abbau kinetischer Energie eine bleibende Verformung der Fahrzeugkarosserie (7) verursachen würden.

8. Federbein- oder Schwingungsdämpferabstützung nach einem der Ansprüche 1 bis 7, **dadurch gekennzeichnet, dass** eine Verformung der Einrichtung zum Abbau kinetischer Energie durch eine Sensoreinrichtung registriert wird.

## Claims

1. Suspension strut support or vibration damper support by means of an upper support bearing (1) of a vehicle wheel suspension, which upper support bearing ultimately supports a piston rod (6) of a vibration damper on a supporting point of a vehicle body (7), for which purpose the piston rod is connected to a support bearing body (2') and the latter is connected to the vehicle body, wherein the support bearing (1) comprises a device for dissipating kinetic energy, which device, when forces occur which without said device would cause deformation of the vehicle body, permits a relative movement between vehicle body (7) and support bearing body (2') and, in the process, dissipates kinetic energy, **characterized in that** the device for dissipating kinetic energy is introduced between support bearing body (2') and vehicle body (7) and consists at least of a crash element (8), the holding force of which is dimensioned in such a manner that it can transmit at least one load by means of supporting forces, provided during operation, of the vibration damper and of an additional spring or of the vibration damper, the additional spring thereof and a vehicle-body-bearing spring to the vehicle body (7) and vice versa without destruction.

2. Suspension strut support or vibration damper support by an upper support bearing (1) of a vehicle wheel suspension, which upper support bearing ultimately elastically supports a piston rod (6) of a vibration damper on a supporting point of a vehicle body (7), wherein the support bearing (1) consists at least of an outer ring (2) assigned to the vehicle body (7) and of at least one inner ring (3) which supports the piston rod (6), with elastomeric material (4) introduced in between, wherein the support bearing (1) comprises a device for dissipating kinetic energy, which device, when forces lying above the designed maximum design forces occur, permits a relative movement between vehicle body (7) and outer ring (2), **characterized in that** the device for dissipating kinetic energy is introduced between outer ring (2) and vehicle body (7) and consists at least of a crash element (8), the holding force of which is dimensioned in such a manner that it can transmit at least one load by means of supporting forces, provided during operation, of the vibration damper and of an additional spring or of the vibration damper, the additional spring thereof and a vehicle-body-bearing spring to the vehicle body (7) and vice versa without destruction.

3. Suspension strut support or vibration damper support according to Claim 2, **characterized in that** the supporting point is located in a suspension strut dome via the device for dissipating kinetic energy between outer ring (2) and vehicle body (7).

4. Suspension strut support or vibration damper support according to Claim 1, **characterized in that** the supporting point is located in a suspension strut dome via the device for dissipating kinetic energy between support bearing body (2') and vehicle body (7) .

5. Suspension strut support or vibration damper support according to one of Claims 1 to 4, **characterized in that** the device for dissipating kinetic energy comprises at least three crash elements (8).

6. Suspension strut support or vibration damper support according to one of Claims 1 to 5, **characterized in that** the holding force of the device for dissipating kinetic energy is adjustable.

7. Suspension strut support or vibration damper support according to one of Claims 1 to 6, **characterized in that** the holding force of the device for dissipating kinetic energy is selected in such a manner that the deformation of said device takes place if the support bearing (1) transmits forces which, without deformation of the device for dissipating kinetic energy, would cause a permanent deformation of the vehicle body (7).

8. Suspension strut support or vibration damper support according to one of Claims 1 to 7, **characterized in that** deformation of the device for dissipating kinetic energy is registered by a sensor device.

## Revendications

1. Support de jambe de force ou d'amortisseur de vibrations par un palier de support supérieur (1) d'une suspension de roue de véhicule, qui supporte une tige de piston (6) d'un amortisseur de vibrations en définitive au niveau d'une zone d'appui d'une carrosserie du véhicule (7), ce pourquoi la tige de piston est connectée à un corps de palier de support (2') et celui-ci est connecté à la carrosserie du véhicule, le palier de support (1) comprenant un dispositif pour réduire l'énergie cinétique, lequel, en présence de forces qui, sans ce dispositif, provoqueraient une déformation de la carrosserie du véhicule, permet un déplacement relatif entre la carrosserie du véhicule (7) et le corps de palier de support (2'), et réduit ainsi l'énergie cinétique, **caractérisé en ce que** le dispositif de réduction d'énergie cinétique est monté entre le corps de palier de support (2') et la carrosserie du véhicule (7) et se compose d'au moins un élément de collision (8) dont la force de retenue est dimensionnée de telle sorte que celle-ci puisse transférer sans destruction au moins une sollicitation par des forces de support, prévues pendant le fonctionnement, de l'amortisseur de vibrations et d'un ressort supplémentaire ou de l'amortisseur de vibrations, de son ressort supplémentaire et d'un ressort de support de carrosserie de véhicule au niveau de la carrosserie du véhicule (7), et inversement.

2. Support de jambe de force ou d'amortisseur de vibrations par un palier de support supérieur (1) d'une suspension de roue de véhicule, qui supporte une tige de piston (6) d'un amortisseur de vibrations en définitive élastiquement au niveau d'une zone d'appui d'une carrosserie du véhicule (7), le palier de support (1) se composant d'au moins une bague extérieure (2) associée à la carrosserie de véhicule (7) et d'au moins une bague intérieure (3) supportant la tige de piston (6) avec un matériau élastomère (4) introduit entre elles, le palier de support (1) comprenant un dispositif de réduction d'énergie cinétique qui, en présence de forces supérieures aux forces de conception maximales prévues, permet un mouvement relatif entre la carrosserie du véhicule (7) et la bague extérieure (2), **caractérisé en ce que** le dispositif de réduction d'énergie cinétique est monté entre la bague extérieure (2) et la carrosserie du véhicule (7) et se compose d'au moins un élément de collision (8) dont la force de retenue est dimensionnée de telle sorte que celle-ci puisse transférer sans destruction au moins une sollicitation par des forces de support, prévues pendant le fonctionnement, de l'amortisseur de vibrations et d'un ressort supplémentaire ou de l'amortisseur de vibrations, de son ressort supplémentaire et d'un ressort de support de carrosserie du véhicule au niveau de la carrosserie du véhicule (7) et inversement.

3. Support de jambe de force ou d'amortisseur de vibrations selon la revendication 2, **caractérisé en ce que** la zone d'appui est disposée, par le biais du dispositif de réduction de l'énergie cinétique entre la bague extérieure (2) et la carrosserie du véhicule (7), dans une coupelle de jambe de force.

4. Support de jambe de force ou d'amortisseur de vibrations selon la revendication 1, **caractérisé en ce que** la zone d'appui est disposée, par le biais du dispositif de réduction d'énergie cinétique entre le corps de palier de support (2') et la carrosserie du véhicule (7), dans une coupelle de jambe de force.

5. Support de jambe de force ou d'amortisseur de vibrations selon l'une quelconque des revendications 1 à 4, **caractérisé en ce que** le dispositif de réduction de l'énergie cinétique comprend au moins trois éléments de collision (8).

6. Support de jambe de force ou d'amortisseur de vibrations selon l'une quelconque des revendications 1 à 5, **caractérisé en ce que** la force de retenue du dispositif de réduction de l'énergie cinétique peut être ajustée.

7. Support de jambe de force ou d'amortisseur de vibrations selon l'une quelconque des revendications 1 à 6, **caractérisé en ce que** la force de retenue du dispositif de réduction de l'énergie cinétique est sélectionnée de telle sorte que sa déformation ait lieu lorsque des forces sont transférées par le palier de support (1), lesquelles, sans déformation du dispositif de réduction de l'énergie cinétique, provoqueraient une déformation permanente de la carrosserie du véhicule (7).

8. Support de jambe de force ou d'amortisseur de vibrations selon l'une quelconque des revendications 1 à 7, **caractérisé en ce qu'**une déformation du dispositif de réduction de l'énergie cinétique est enregistrée par un dispositif de capteur.
